# EUROPEAN PATENT SPECIFICATION

(11) **EP 3 398 310 B1**
(45) Date of publication and mention of the grant of the patent: **13.11.2019**
(21) Application number: 16701007.3
(22) Date of filing: 19.01.2016
(51) Int. Cl.: H04L 29/06, H04L 12/863, H04L 29/08

(54) **TRANSMISSION DEVICE FOR A LOW-BANDWIDTH COMMUNICATION LINK**
ÜBERTRAGUNGSVORRICHTUNG MIT KOMMUNIKATIONSVERBINDUNG MIT GERINGER BANDBREITE
DISPOSITIF DE TRANSMISSION POUR UNE LIAISON DE COMMUNICATION À FAIBLE BANDE PASSANTE

(43) Date of publication of application: 07.11.2018
(73) Proprietor: Huawei Technologies Co., Ltd., Longgang District Shenzhen, Guangdong 518129 (CN)
(72) Inventor: LOWE, Christopher, 80992 Munich (DE); SMITH, Peter, 80992 Munich (DE)
(74) Representative: Kreuz, Georg Maria
(86) International application number: PCT/EP2016/051009
(87) International publication number: WO 2017/125136

(56) References cited:
- WO-A1-2009/138521
- US-A1- 2001 037 182
- US-A1- 2002 044 693
- US-A1- 2015 339 914
- US-B1- 8 786 546

## Description

### TECHNICAL FIELD

The present invention relates to a transmission device, a storage container and a method for transmitting a plurality of input information.

The present invention also relates to a computer-readable storage medium storing program code, the program code comprising instructions for carrying out such a method.

### BACKGROUND

Consider some asset tracking device or a sensing device which is connected by an intermittently-available, low-bandwidth communication link. The device can generate data more quickly than it can be sent. In such situations, there is a need for a way of handling this flow of data so that the device can utilize the available bandwidth sensibly.

Different kinds of queuing mechanisms have been presented in the prior art. In a FIFO queue out-of-date information would be transmitted prior to current information. This is undesirable in many tracking and sensing applications. A LIFO queue is typically more useful because most-current information is transmitted first. However, a slow system can lead to big gaps in the tracking data.

The queue on any system is finite, so data loss can occur as items fall off the end of the queue.

WO2009138521A1 discloses a method for testing an effect of a pharmaceutical substance in a subject measuring at least one parameter indicative of a body function of the subject.

US2001037182A1 discloses a method of characterizing an agricultural product at a location and an analysis system.

US8786546B1 discloses a method for activating an operational mode change of a device.

US2002044693A1 discloses image encoder and method of encoding images according to weight of portions of image.

### SUMMARY OF THE INVENTION

The object of the present invention is to improve bandwidth efficiency and in particular to provide a transmission device, a storage container and a method for transmitting a plurality of input information, wherein the transmission device, the storage container and the method overcome one or more of the above-mentioned problems of the prior art.

The present invention defines a device according to claim 1, a method according to claim 13 and a computer-readable storage medium according to claim 14. Further embodiments are set forth in the dependent claims 2-12.

A first aspect of the invention provides a transmission device for transmitting a plurality of input information, comprising:
- a weighting unit configured to assign a plurality of transmission weights to the plurality of input information, and assign one or more coalesced transmission weights to the one or more coalesced input information;
- a coalescing unit configured to coalesce the plurality of input information based on the plurality of weights to obtain one or more coalesced input information; and
- a transmitter configured to transmit the one or more coalesced input information according to the assigned transmission weights, the coalesced input information with higher weight is transmitted with higher priority.

The transmission device of the first aspect can coalesce and transmit input information based on a weighting that is assigned by the weighting unit. Thus, if a transmission bandwidth is not sufficient, it can be ensured that the most important bits of information can still be transmitted.

In some embodiments of the invention, the transmission device receives the input information from an acquisition device, e.g. a sensor. In other embodiments of the invention, the tracking device comprises a tracking unit and/or sensor.

The transmitter may be a wireless transmitter, configured to transmit the coalesced input information over a wireless network, e.g. a cellular network such as UMTS, LTE or 5G.

The transmission device of the first aspect is of particular advantage when used as part of an Intemet-of-Things (IoT) device.

Intemet-of-Things devices typically comprise a module to transmit data using a wireless data connection, where the wireless data connection has the ability to operate with very low signal powers, e.g. less than -130 dBm. IoT devices often have to operate on battery power for very long time, i.e., they must have a very low power consumption and/or use power saving modes which restrict the opportunities to transmit data. This can lead to limitations with regard to the transmit power and transmit data rate. Thus, it can be particularly relevant to find ways of dealing with the limitations of the communication link.

Assigning coalesced transmission weights to the one or more coalesced input information has the advantage that a priority can be determined not only for original input information, but also for the coalesced input information.

In a first implementation of the transmission device of the first aspect at least one of the plurality of transmission weights comprises:
- a transmit flag that indicates whether an input information has already been transmitted;
- a transmit priority value that indicates a priority for transmitting an input information;
- a concentration value that indicates a compression level of an input information; and/or
- a preservation desire value that indicates a priority for preserving an input information.

Using one or more of these transmission weights allows the transmission device to better decide which input information needs to be transmitted with highest priority, and which does not need to be transmitted (e.g. because it has been transmitted already, as indicated by the transmit flag).

In a third implementation of the transmission device of the first aspect further comprises a tracking unit configured to obtain the plurality of input information.

For example, the tracking unit can be configured to track an asset, such as a vehicle, a pet, luggage, wheeled refuse bins, etc.

In particular, the tracking unit may comprise a geolocation device which is configured to periodically gather geolocation information. This may be done using some global navigation satellite system (e.g. GPS, GLONASS etc.) or possibly through some other means. The frequency of location fixes may be higher than the available bandwidth for the transmission device. Or the asset may travel to areas with no uplink coverage. At these times, it is important to prioritise the data sent when some limited bandwidth is available. In this way, it would be possible to answer questions such as "has the asset ever been into this area", or "where was the asset at this time". The coalescing of input information (which here comprises geolocation information) may lead to a decreased confidence in these answers (due to a loss in accuracy or resolution during coalescence), but this still makes good use of the limited bandwidth.

For example, information whether an asset is still within a predefined target area may be assigned a high transmission priority, whereas more detailed information about the exact location may be assigned a lower priority.

In a fourth implementation of the transmission device of the first aspect, the coalescing unit is configured to perform a Fourier Transformation, FT, and/or a Discrete Cosine Transformation, DCT, on the plurality of input information, and store one or more coefficients, in particular one or more most significant coefficients, of the FT and/or the DCT in a coalesced input information.

Using only one or more of the most important coefficients of the above-mentioned transformations has the advantage that the data rate can be significantly reduced while still ensuring that the most important information are transmitted.

In a fifth implementation of the transmission device of the first aspect the plurality of input information comprises a plurality of motion information, and the transmission device comprises a motion transformation unit configured to determine from the plurality of motion information a plurality of motion deviations compared to one or more base movements.

This has the advantage that the one or more base movements can be transmitted and a subset of the plurality of motion deviations can be transmitted. This has a lower bandwidth requirement than transmitting the plurality of motion information, but can still provide a good approximation to the plurality of motion information.

In a sixth implementation of the transmission device of the fifth implementation of the first aspect, the plurality of motion deviations comprise a plurality of transversal motion deviations and/or a plurality of longitudinal motion deviations.

These can be computed particularly efficiently. Furthermore, by coalescing the plurality of transversal motion deviations and/or the plurality of longitudinal motion deviations, a bandwidth requirement can be reduced. In particular, the plurality of longitudinal motion deviations corresponds to a velocity component, whereas the plurality of transversal motion deviations correspond to a perpendicular deviation from the base movement. Thus, a coalescing unit can be configured to compress and/or omit some of these information, depending on what kind of information are more important for a particular application.

In a seventh implementation of the transmission device of the fifth or sixth implementation of the first aspect, the transmission device further comprises a motion segmentation unit configured to derive from the plurality of motion information one or more base line segments, wherein the transformation unit is configured to use the one or more base line segments as base movements.

This has the advantage that the transmission device can automatically determine a first basic approximation to the plurality of motion information.

In an eighth implementation of the transmission device of the first aspect the motion segmentation unit is configured to detect a significant motion change in the motion data and initiate a new base line segment at a detected motion change.

This provides a particularly efficient way of implementing the motion segmentation.

In a ninth implementation of the transmission device of the first aspect the motion segmentation unit is configured to detect a significant motion change by detecting a deviation from an averaged motion of plurality of motion information, wherein the deviation is higher than a predetermined threshold.

This provides a practical way of implementing motion change detection. In particular, the pre- dated threshold as an adjustable parameter provides a simple way of tuning the transmission device for different applications. For example, in some applications, it may be beneficial to have a higher number of base line segments, whereas in other applications a smaller number of base line segments may be preferable. This can be adjusted by varying the predetermined threshold.

In a tenth implementation of the transmission device according to the first aspect, the coalescing unit is configured to perform a Discrete Sine Transformation, DST, on the plurality of motion deviations, and store one or more coefficients, in particular one or more most significant coefficients, of the DST of the plurality of motion deviations in a coalesced input information.

In an eleventh implementation of the transmission device of the first aspect, the transmission device further comprises an asset sensor configured to acquire a plurality of asset input information about one or more assets and/or an environmental sensor configured to acquire a plurality of environmental information about an environment of the environmental sensor.

This has the advantage that information about an asset or environmental information, which may be acquired with varying data rate, possibly a higher data rate than the available transmission bandwidth, can be efficiently transmitted.

A second aspect of the invention refers to a storage container, in particular a waste basket, comprising a transmission device according to the eleventh implementation of the first aspect.

The storage container can be for example any kind of storage container where it may be desired to transmit an information about the quantity or some other characteristic of the container. For example, the container may be a container for solid or liquid food, and the transmission device may be configured to transmit information about the fill-level, and when a refill is required. In other embodiments, the container may be a waste basket, where a high fill-level would indicate that it needs to be emptied.

In order to detect a fill-level, the transmission device may comprise one or more sensors configured to detect a fill-level of the storage container, e.g. an ultrasonic measuring device may be in the roof of a bin, in order to measure how full the bin is. Readings from the sensor may be more frequent than the bandwidth may tolerate. The users of this data may wish to extrapolate from the readings, to predict when a bin may need emptying. Some extrapolation can be done already within the transmission device located at the bin. For example, the transmission device can be an Intemet-of-Things device with particular low power requirements.

Preferably, the technique would allow a rich set of data to be sent when the bandwidth is good, so that operators can get time-of-day readings, to infer when peak refuse deposits are made, etc. But less rich information is still useful.

For example, a user may get notified when the bin is full and needs emptying. Waiting any longer may lead to a mess when refuse is scattered near the bin, which can be costly to clear up, and can lead to fines. Emptying the bin any earlier means suboptimal efficiency - more fuel is used on the refuse truck.

A third aspect of the invention refers to a method for transmitting a plurality of input information, the method comprising:
- assigning a plurality of transmission weights to the plurality of input information;
- coalescing the plurality of input information based on the plurality of weights to obtain one or more coalesced input information, and assign one or more coalesced transmission weights to the one or more coalesced input information; and
- transmitting the one or more coalesced input information according to the assigned transmission weights, the coalesced input information with higher weight is transmitted with higher priority.

The methods according to the third aspect of the invention can be performed by the transmission device according to the first aspect of the invention. Further features or implementations of the method according to the third aspect of the invention can perform the functionality of the transmission device according to the first aspect of the invention and its different implementation forms.

In a first implementation of the method for transmitting a plurality of input information of the third aspect, the method according to the method for transmitting a plurality of input information, further comprises:
- performing a pre-processing on the plurality of input information;
- performing a Fourier Transformation, FT, and/or a Discrete Cosine Transformation, DCT, on the pre-processed plurality of input information; and
- storing one or more coefficients, in particular one or more most significant coefficients, of the FT and/or the DCT in a coalesced input information.

The pre-processing step may comprise a step of smoothing, e.g. Gaussian smoothing, of the plurality of input information. This pre-processing has the advantage that noise can be reduced, which also helps reduce the required transmission bandwidth.

A fourth aspect of the invention refers to a computer-readable storage medium storing program code, the program code comprising instructions for carrying out the method according to the third aspect and its implementation.

### BRIEF DESCRIPTION OF THE DRAWINGS

To illustrate the technical features of embodiments of the present invention more clearly, the accompanying drawings provided for describing the embodiments are introduced briefly in the following. The accompanying drawings in the following description are merely some embodiments of the present invention, but modifications on these embodiments are possible without departing from the scope of the present invention as defined in the claims.
- FIG. 1: is a block diagram illustrating a transmission device in accordance with an embodiment of the present invention;
- FIG. 2: is a block diagram illustrating a storage container in accordance with a further embodiment of the present invention;
- FIG. 3: is a flow chart of a method for transmitting a plurality of input information in accordance with a further embodiment of the present invention;
- FIG. 4: is a schematic illustration of input information and coalesced input information in accordance with a further embodiment of the present invention;
- FIGs. 5A to 5C: illustrate discrete cosine transformation (DCT) processing of a set of input information in accordance with a further embodiment of the present invention; and
- FIGs. 6A to 6D: illustrate different processing steps of a plurality of motion information in accordance with a further embodiment of the present invention.

### DETAILED DESCRIPTION OF THE EMBODIMENTS

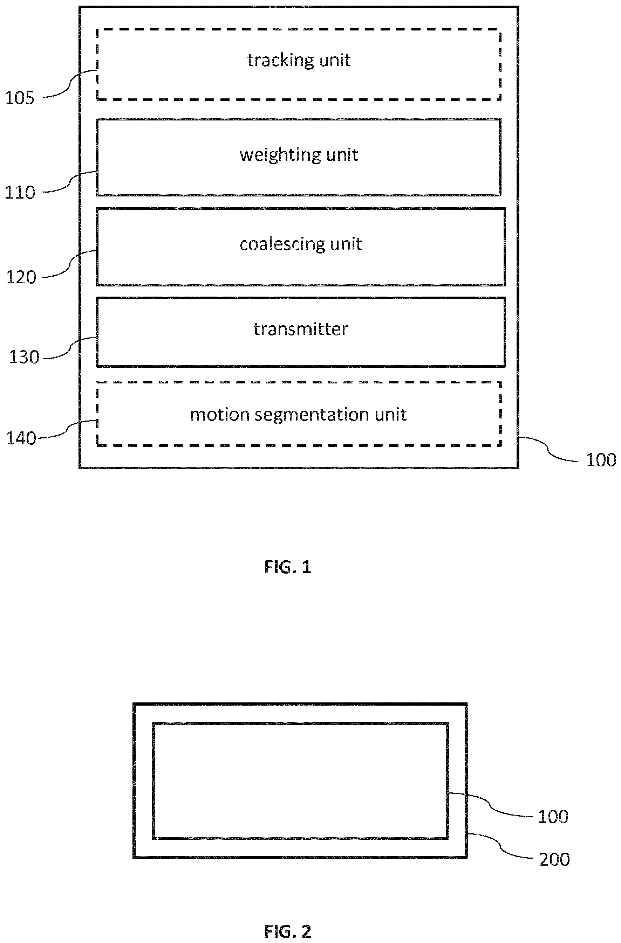

FIG. 1 shows a transmission device 100 for transmitting a plurality of input information. The transmission device 100 comprises a weighting unit 110, a coalescing unit 120 and a transmitter 130. The weighting unit 110 and the coalescing unit 120 can be realized on the same physical unit, for example a processor and memory connected to the processor (not shown in FIG. 1).

Optionally, as indicated with dashed lines in FIG. 1, the transmission device 100 may further comprise a tracking unit 105 and a motion segmentation unit 140.

The weighting unit 110 is configured to assign a plurality of transmission weights to the plurality of input information. The transmission weights can indicate a priority of transmitting each of the plurality of input information.

The coalescing unit 120 is configured to coalesce the plurality of input information based on the plurality of weights to obtain one or more coalesced input information. Coalescing the input information may comprise compressing and/or decimating the input information. It may also comprise extracting important sub-information from the input information.

The transmitter 130 configured to transmit the one or more coalesced input information. The transmitter 130 may comprise an antenna for transmitting the one or more coalesced input information over a wireless network. The transmitter 130 may be a low-bandwidth transmitter that is configured to transmit the coalesced input information at a low bandwidth (e.g., less than 1 kbps, in particular less than 100 bps), which may allow the transmitter 130 to have very low energy requirements.

The transmission device 100 of FIG. 1 can be part of a particulate monitor or a gas probe, to monitor pollution, or a thermometer or light meter. Here data samples may be gathered more quickly than the available transmission bandwidth, or perhaps the opportunities to transmit data are not continuous. Having some means to give aggregated or compressed data may be more useful than just the most recent details. For example, knowing the peak and average pollution levels within a city for some period is more useful than an incomplete series of time values for these.

FIG. 2 shows a storage container 200, in particular a waste basket, comprising a transmission device 100, e.g. the transmission device 100 that is illustrated in FIG. 1.

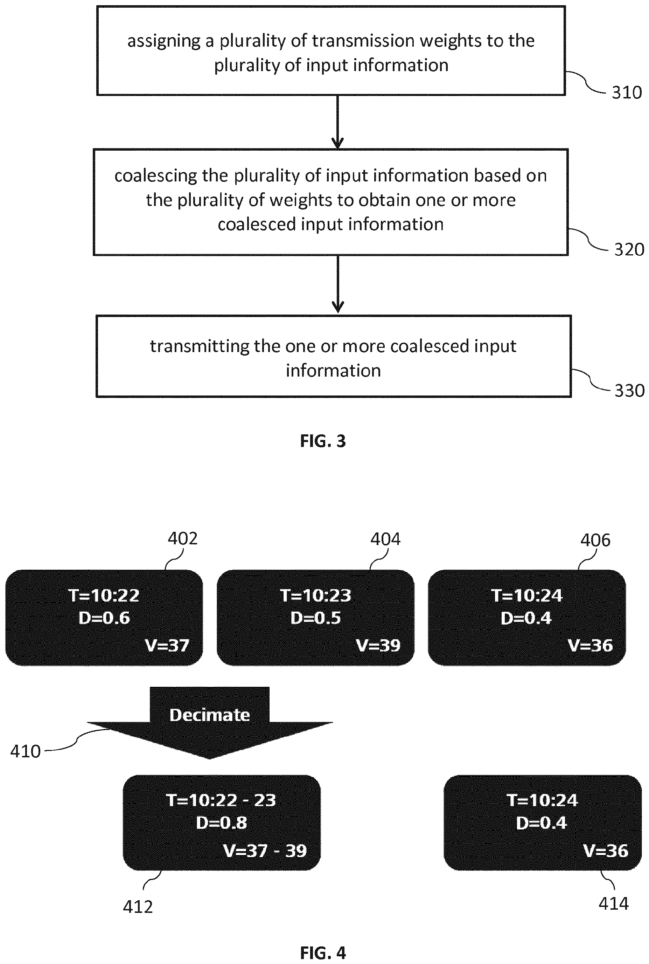

FIG. 3 shows a method 300 for transmitting a plurality of input information. The method may be implemented on a processor, e.g. a processor of a transmission device as shown in FIG. 1.

The method 300 comprises a first step 310 of assigning a plurality of transmission weights to the plurality of input information.

The method 300 comprises a second step 320 of coalescing the plurality of input information based on the plurality of weights to obtain one or more coalesced input information.

The method 300 comprises a third step 330 of transmitting the one or more coalesced input information.

The method 300 may comprise further steps (not shown in FIG. 3) of pre-processing the plurality of input information and/or performing one or more transformations with the plurality of input information.

Many of the applications of the method of FIG. 3 may require some processing and interpretation of the data. The processing may lead to actions being taken. The interpretation may lead to someone gathering an understanding of the data. The interpretation often comes from some visualisation. Techniques such as Candlestick Charts and Error Bars are well known. Techniques such as blurring or smearing a data point to represent a range are also available. In a similar manner to these visualisation techniques, data which is not absolute but is aggregated can be managed. Techniques that can be applied include fuzzy logic and Bayesian analysis.

FIG. 4 is a schematic illustration of input information 402, 404, 406 and coalesced input information 412, 414 in accordance with a further embodiment of the present invention.

The input information comprises a first input information 402. As an illustrative example, the first input information 402 indicates a time, T=10:22 and a value V=37, as well as a transmit desire, D=0.6. The transmit desire is an example of a transmission weight that can be determined by the weighting unit of a transmission device as shown in FIG. 1.

A second input information 404 indicates a time T=10:23 and a value V=39, as well as a transmit desire that is set to D=0.5.

A third input information 406 indicates a time T=10:24 and a value V=36, as well as a transmit desire that is set to D=0.4.

In this example, the transmit desire values of the first, second and third input information 402, 404, 406 have decreasing values. This can be for example because it is determined that information that are acquired earlier in time are of higher importance.

FIG. 4 illustrates a step 410 of decimating the input information 402, 404, 406. This can be seen as an example of coalescing input information to obtain coalesced input information 412, 414.

The first coalesced input information 412 has been obtained by coalescing the first and second input information 402, 404. Therefore, the first coalesced input information 422 indicates a time range of T=10:22 to 10:23 and a value range V=37 to 39. A transmit desire of the first coalesced input information is D=0.8. The transmit desire value of the coalesced input information is higher than the transmit desire value of the first and second input information 402, 404 because it comprises information about two original input information, i.e., it covers a longer time range.

In an example embodiment, the first coalesced input information 412 can comprise a value V=38, i.e., it can comprise an average of the value of the first and second input information 402, 404.

A second coalesced input information 414 corresponds to the third input information 406. Typically, the coalesced input information would be different from the corresponding original input information.

The coalesced input information 412, 414 as shown in FIG. 4 can be obtained e.g. by an auto-decimating weighted priority queue. The decimation can be applied based on an ingestion rate and a transmission rate. In other words, if the transmission rate is much lower than the ingestion rate, than a high decimation needs to be applied.

Communication with a transmitter of the transmission device can be performed using an algorithm to determine the most valuable data, and transmitting that first. This is not necessarily the most recent, or the first in the queue. For example, as illustrated in FIG. 4, the first coalesced input information 412 has a higher transmit desire value than the second coalesced input information 414 and therefore may be transmit first, even though it corresponds to information that were acquired at an earlier point in time.

The coalesced input information can be transmitted in messages that are queued in the device, e.g. in a memory of the transmission device.

Of course, the transmission device typically has a finite queue capacity. For example, the queue capacity can be limited by a size of a memory of the transmission device.

With every record in the queue one or more of the following attributes can be associated:
- a Transmitted flag;
- a Transmit Desire Valve;
- a Concentration; and
- a Preservation Desire.

As the queue fills up to its capacity, we apply a filter to the elements of the queue, which analyzes several (typically at least two) adjacent elements, and if conditions are met, coalesces them. The filter can be configured using one or more filter parameters.

Passes are made over the queue, to coalesce elements. The weighting to coalesce increases with age, and counters the Preservation Desire. Other weightings can apply to influence a decision to coalesce or delete elements.

Several passes can be made on the queue in order to reduce its size. If a queue reduction is not obtained, then another pass can be made with a greater desire to coalesce.

When it comes to transmission, the transmission device can choose the item with the greatest Transmit Desire. In preferred embodiments, a tuneable exponential fall-off for age can be applied.

After transmission, a record can be marked as Transmitted, and its Transmit Desire as well as its preservation desire are set to zero. The record can subsequently be coalesced, but will not be retransmitted in an uncoalesced form.

A separate task can iterate over the queue to ensure deletion. Preferably, last elements in a queue are more likely to be deleted.

As an option, we can apply an error distribution function to make other elements more likely to be transmitted, possibly in the manner of a binary-tree, by altering the Transmit Desire.

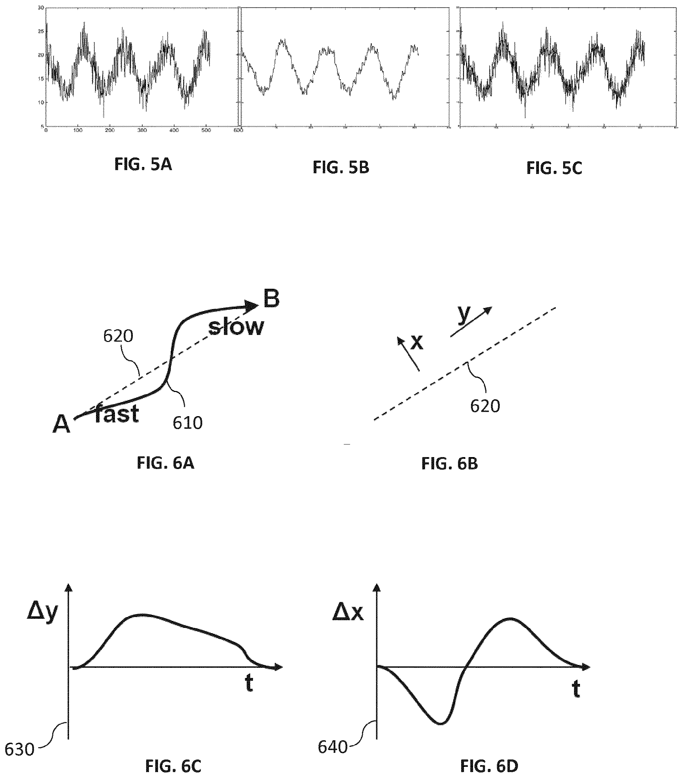

FIG. 5A shows an original temperature dataset. This is an example of input information that are to be transmitted using a transmission device as shown in FIG. 1.

FIG. 5B shows 16 largest discrete cosine transformation, DCT, coefficients that have been obtained from the original temperature dataset. As can be seen in FIG. 5B, the 16 largest DCT coefficients well approximate the original temperature dataset.

FIG. 5C shows a comparison of the original and the compressed dataset. Also here, it can be recognized that the differences between original and compressed dataset may be mostly due to noise in the original dataset, i.e., little valuable information has been lost when using only the largest DCT coefficients.

Pre-processing can be applied to change the input information in to something amenable to compression such as with DCT. For example, geospatial data can be change into a distance along a path and/or a deviation from a path.

A data coalescing method in accordance with the present invention can leverage data application types. For example, selected time-series data values can be combined using DCT. Furthermore, selected time-series spatial coordinates can be pre-processed before DCT.

FIGs. 6A to 6D illustrate an example embodiment of the invention related to a transmission of a 2D and/or 3D data point time-series.

In a first (optional) step, a motion sequence is split into a number of segments (lines from A to B). FIG. 6A shows a motion 610 from point A to point B, as well as the corresponding base line segment 620.

Splits can be performed at locations of significant motion discontinuity, e.g. characterized by a sudden sustained change of speed/direction. This can be determined for example by comparing with a threshold value of speed and/or direction change.

For each path segment, a start point A and an end point B are determined, each point being characterised e.g. by time and position as most important information.

An intermediate path can be rotated, translated and converted to deviation from a constant-speed path from A to B:

Subsequently, one or both of the following motion characteristics can be determined:
A longitudinal deviation, Δy (difference in direction of path, displacement vs time).
A transverse deviation, Δx (difference perpendicular to path, displacement vs time).

FIG. 6B shows the base segment 620, as well as the directions x (perpendicular to the base segment) and y (along the base segment).

FIG. 6C is a plot of a longitudinal deviation 630 of the motion from the base segment, plotted against time t (horizontal axis).

FIG. 6D shows the corresponding transverse deviation 640 from the base segment, both plotted against time t (horizontal axis).

The above deviations can then be compressed using discrete sine transformation, DST, (due to boundary conditions) and a selection of largest components. This can be implemented as part of a coalescing step in accordance with an embodiment of the present invention.

Groups of DST coefficients can then be inserted into a priority message queue.

To summarize, relevant points of some embodiments of the present invention relate to a software subsystem that prioritizes relevant data to be transmitted over a restricted-bandwidth, intermittent data link. Preferably, a method in accordance with the invention coalesces and summarizes data to transmit relevant information first. It can further balance a transition of high-resolution new data and lower-resolution old data and can make good use of a restricted queue.

The foregoing descriptions are only implementation manners of the present invention, the scope of the present invention is not limited to this. Any variations or replacements can be easily made through person skilled in the art. Therefore, the protection scope of the present invention should be subject to the protection scope of the attached claims.

## Claims

1. A transmission device (100) for transmitting a plurality of input information, comprising:
- a weighting unit (110) configured to assign a plurality of transmission weights to the plurality of input information (402, 404, 406);
- a coalescing (120) unit configured to coalesce the plurality of input information based on the plurality of weights to obtain one or more coalesced input information (412, 414), and assign one or more coalesced transmission weights to the one or more coalesced input information; and
- a transmitter (130) configured to transmit the one or more coalesced input information according to the assigned transmission weights, the coalesced input information with higher weight being transmitted with higher priority.

2. The transmission device (100) of claim 1, wherein at least one of the plurality of transmission weights comprises:
- a transmit flag that indicates whether an input information has already been transmitted;
- a transmit priority value that indicates a priority for transmitting an input information;
- a concentration value that indicates a compression level of an input information; and/or
- a preservation desire value that indicates a priority for preserving an input information.

3. The transmission device (100) of one of the previous claims, further comprising a tracking unit (105) configured to obtain the plurality of input information.

4. The transmission device (100) of one of the previous claims, wherein the coalescing unit (120) is configured to perform a Fourier Transformation, FT, and/or a Discrete Cosine Transformation, DCT, on the plurality of input information, and store one or more coefficients, in particular one or more most significant coefficients, of the FT and/or the DCT in a coalesced input information.

5. The transmission device (100) of one of the previous claims, wherein the plurality of input information comprises a plurality of motion information (610), and wherein the transmission device comprises a motion transformation unit configured to determine from the plurality of motion information a plurality of motion deviations compared to one or more base movements.

6. The transmission device (100) of claim 5, wherein the plurality of motion deviations comprise a plurality of transversal motion deviations and/or a plurality of longitudinal motion deviations.

7. The transmission device (100) of claim 5 or 6, further comprising a motion segmentation unit (140) configured to derive from the plurality of motion information (610) one or more base line segments (620), wherein the transformation unit is configured to use the one or more base line segments (620) as base movements.

8. The transmission device (100) of claim 7, wherein the motion segmentation unit (140) is configured to detect a significant motion change in the motion data and initiate a new base line segment (620) at a detected motion change.

9. The transmission device of claim 8, wherein the motion segmentation unit (140) is configured to detect a significant motion change by detecting a deviation from an averaged motion of plurality of motion information, wherein the deviation is higher than a predetermined threshold.

10. The transmission device of one of claims 5 to 9, wherein the coalescing unit (120) is configured to perform a Discrete Sine Transformation, DST, on the plurality of motion deviations, and store one or more coefficients, in particular one or more most significant coefficients, of the DST of the plurality of motion deviations in a coalesced input information.

11. The transmission device (100) of one of the previous claims, further comprising an asset sensor configured to acquire a plurality of asset input information about one or more assets and/or an environmental sensor configured to acquire a plurality of environmental information about an environment of the environmental sensor.

12. A storage container (200), in particular a waste basket, comprising a transmission device (100) according to claim 11.

13. A method (300) for transmitting a plurality of input information, the method comprising:
- assigning (310) a plurality of transmission weights to the plurality of input information;
- coalescing (320) the plurality of input information based on the plurality of weights to obtain one or more coalesced input information, and assigning one or more coalesced transmission weights to the one or more coalesced input information; and
- transmitting (330) the one or more coalesced input information according to the assigned transmission weights, the coalesced input information with higher weight being transmitted with higher priority.

14. A computer-readable storage medium storing program code, the program code comprising instructions for carrying out the method of claim 13.

## Patentansprüche

1. Übertragungsvorrichtung (100) zum Übertragen einer Vielzahl von Eingabeinformationen, umfassend:
- eine Gewichtungseinheit (110), die dazu konfiguriert ist, der Vielzahl von Eingabeinformationen (402, 404, 406) eine Vielzahl von Übertragungsgewichtungen zuzuweisen;
- eine Koaleszenzeinheit (120), die dazu konfiguriert ist, die Vielzahl von Eingabeinformationen basierend auf der Vielzahl von Gewichtungen zu koaleszieren, um eine oder mehrere koaleszierte Eingabeinformationen (412, 414) zu erlangen, und eine oder mehrere koaleszierte Übertragungsgewichtungen der einen oder den mehreren koaleszierten Eingabeinformationen zuzuordnen; und
- einen Sender (130), der dazu konfiguriert ist, die eine oder die mehreren koaleszierten Eingabeinformationen gemäß den zugeordneten Übertragungsgewichtungen zu übertragen, wobei die koaleszierten Eingabeinformationen mit einer höheren Gewichtung mit höherer Priorität übertragen werden.

2. Übertragungsvorrichtung (100) nach Anspruch 1, wobei zumindest eine der Vielzahl von Übertragungsgewichtungen Folgendes umfasst:
- ein Übertragungs-Flag, das anzeigt, ob eine Eingabeinformation bereits übertragen wurde;
- einen Übertragungsprioritätswert, der eine Priorität hinsichtlich des Übertragens einer Eingabeinformation anzeigt;
- einen Konzentrationswert, der ein Kompressionsniveau einer Eingabeinformation anzeigt; und/oder
- einen Wert für den Erhaltungswunsch, der eine Priorität für die Erhaltung einer Eingabeinformation angibt.

3. Übertragungsvorrichtung (100) nach einem der vorstehenden Ansprüche, ferner umfassend eine Tracking-Einheit (105), die zum Erlangen der Vielzahl von Eingabeinformationen konfiguriert ist.

4. Übertragungsvorrichtung (100) nach einem der vorstehenden Ansprüche, wobei die Koaleszenzeinheit (120) dazu konfiguriert ist, eine Fourier-Transformation (FT) und/oder eine diskrete Kosinustransformation (DCT) an der Vielzahl von Eingabeinformationen durchzuführen und einen oder mehrere Koeffizienten, insbesondere einen oder mehrere signifikanteste Koeffizienten, der FT und/oder der DCT in einer koaleszierten Eingabeinformation zu speichern.

5. Übertragungsvorrichtung (100) nach einem der vorstehenden Ansprüche, wobei die Vielzahl von Eingabeinformationen eine Vielzahl von Bewegungsinformationen (610) umfasst und wobei die Übertragungsvorrichtung eine Bewegungstransformationseinheit umfasst, die dazu konfiguriert ist, aus der Vielzahl von Bewegungsinformationen eine Vielzahl von Bewegungsabweichungen im Vergleich zu einer oder mehreren Basisbewegungen zu bestimmen.

6. Übertragungsvorrichtung (100) nach Anspruch 5, wobei die Vielzahl von Bewegungsabweichungen eine Vielzahl von transversalen Bewegungsabweichungen und/oder eine Vielzahl von longitudinalen Bewegungsabweichungen umfasst.

7. Übertragungsvorrichtung (100) nach Anspruch 5 oder 6, ferner umfassend eine Bewegungssegmentierungseinheit (140), die dazu konfiguriert ist, aus der Vielzahl von Bewegungsinformationen (610) ein oder mehrere Basisliniensegmente (620) abzuleiten, wobei die Transformationseinheit dazu konfiguriert ist, das eine oder die mehreren Basisliniensegmente (620) als Basisbewegungen zu verwenden.

8. Übertragungsvorrichtung (100) nach Anspruch 7, wobei die Bewegungssegmentierungseinheit (140) dazu konfiguriert ist, eine signifikante Bewegungsänderung in den Bewegungsdaten zu detektieren und ein neues Basisliniensegment (620) an einer detektierten Bewegungsänderung einzuleiten.

9. Übertragungsvorrichtung nach Anspruch 8, wobei die Bewegungssegmentierungseinheit (140) dazu konfiguriert ist, eine signifikante Bewegungsänderung zu detektieren, und zwar durch Detektieren einer Abweichung von einer durchschnittlichen Bewegung einer Vielzahl von Bewegungsinformationen, wobei die Abweichung höher als ein vorher bestimmter Schwellenwert ist.

10. Übertragungsvorrichtung nach einem der Ansprüche 5 bis 9, wobei die Koaleszenzeinheit (120) dazu konfiguriert ist, eine diskrete Sinustransformation (DST) an der Vielzahl von Bewegungsabweichungen durchzuführen und einen oder mehrere Koeffizienten, insbesondere einen oder mehrere signifikanteste Koeffizienten, der DST der Vielzahl von Bewegungsabweichungen in einer koaleszierten Eingabeinformation zu speichern.

11. Übertragungsvorrichtung (100) nach einem der vorstehenden Ansprüche, ferner umfassend einen Asset-Sensor, der dazu konfiguriert ist, eine Vielzahl von Asset-Eingabeinformationen über einen oder mehrere Asset-Werte zu erfassen, und/oder einen Umgebungssensor, der dazu konfiguriert ist, eine Vielzahl von Umgebungsinformationen über eine Umgebung des Umgebungssensors zu erfassen.

12. Speicherbehälter (200), insbesondere ein Papierkorb, umfassend eine Übertragungsvorrichtung (100) nach Anspruch 11.

13. Verfahren (300) zum Übertragen einer Vielzahl von Eingabeinformationen, wobei das Verfahren Folgendes umfasst:
- Zuweisen (310) einer Vielzahl von Übertragungsgewichtungen zu der Vielzahl von Eingabeinformationen;
- Koaleszieren (320) der Vielzahl von Eingabeinformationen basierend auf der Vielzahl von Gewichtungen zum Erlangen von einer oder mehreren koaleszierten Eingabeinformationen und Zuweisen einer oder mehrerer koaleszierten Übertragungsgewichtungen zu der einen oder den mehreren koaleszierten Eingabeinformationen; und
- Übertragen (330) der einen oder mehreren koaleszierten Eingabeinformationen gemäß den zugewiesenen Übertragungsgewichtungen, wobei die koaleszierten Eingabeinformationen mit einer höheren Gewichtung mit höherer Priorität übertragen werden.

14. Computerlesbares Speichermedium zum Speichern von Programmcode, wobei der Programmcode Anweisungen zum Ausführen des Verfahrens nach Anspruch 13 umfasst.

## Revendications

1. Dispositif de transmission (100) pour la transmission d'une pluralité d'informations d'entrée, comprenant :
- une unité de pondération (110) configurée pour attribuer une pluralité de pondérations de transmission à la pluralité d'informations d'entrée (402, 404, 406) ;
- une unité de coalescence (120) configurée pour coalescer la pluralité d'informations d'entrée sur la base de la pluralité de pondérations pour obtenir une ou plusieurs informations d'entrée coalescées (412, 414), et attribuer une ou plusieurs pondérations de transmission coalescées à l'une ou aux plusieurs informations d'entrée coalescées ; et
- un émetteur (130) configuré pour transmettre l'une ou les plusieurs informations d'entrée coalescées en fonction des pondérations de transmission attribuées, les informations d'entrée coalescées de pondération supérieure étant transmises avec une priorité plus élevée.

2. Dispositif de transmission (100) selon la revendication 1, dans lequel au moins une de la pluralité de pondérations de transmission comprend :
- un drapeau de transmission qui indique si une information d'entrée a déjà été transmise ;
- une valeur de priorité de transmission qui indique une priorité pour la transmission d'une information d'entrée ;
- une valeur de concentration qui indique un niveau de compression d'une information d'entrée ; et/ou
- une valeur de souhait de conservation qui indique une priorité pour la conservation d'une information d'entrée.

3. Dispositif de transmission (100) selon une des revendications précédentes, comprenant en outre une unité de suivi (105) configurée pour obtenir la pluralité d'informations d'entrée.

4. Dispositif de transmission (100) selon une des revendications précédentes, dans lequel l'unité de coalescence (120) est configurée pour réaliser une transformation de Fourier, FT, et/ou une transformation en cosinus discrète, DCT, sur la pluralité d'informations d'entrée, et stocker un ou plusieurs coefficients, en particulier un ou plusieurs des coefficients les plus importants, de FT et/ou DCT dans une information d'entrée coalescée.

5. Dispositif de transmission (100) selon une des revendications précédentes, dans lequel la pluralité d'informations d'entrée comprend une pluralité d'informations de mouvement (610), et dans lequel le dispositif de transmission comprend une unité de transformation de mouvement configurée pour déterminer à partir de la pluralité d'informations de mouvement une pluralité d'écarts de mouvement par rapport à un ou plusieurs mouvements de base.

6. Dispositif de transmission (100) selon la revendication 5, dans lequel la pluralité d'écarts de mouvement comprend une pluralité d'écarts de mouvement transversal et/ou une pluralité d'écarts de mouvement longitudinal.

7. Dispositif de transmission (100) selon la revendication 5 ou 6, comprenant en outre une unité de segmentation de mouvement (140) configurée pour dériver à partir de la pluralité d'informations de mouvement (610) un ou plusieurs segments de ligne de base (620), dans lequel l'unité de transformation est configurée pour utiliser les un ou plusieurs segments de ligne de base (620) en tant que mouvements de base.

8. Dispositif de transmission (100) selon la revendication 7, dans lequel l'unité de segmentation de mouvement (140) est configurée pour détecter un changement de mouvement important dans les données de mouvement et initier un nouveau segment de ligne de base (620) lors d'un changement de mouvement détecté.

9. Dispositif de transmission selon la revendication 8, dans lequel l'unité de segmentation de mouvement (140) est configurée pour détecter un changement de mouvement important par détection d'un écart par rapport à un mouvement moyen de la pluralité d'informations de mouvement, dans lequel l'écart est supérieur à un seuil prédéterminé.

10. Dispositif de transmission selon une des revendications 5 à 9, dans lequel l'unité de coalescence (120) est configurée pour réaliser une transformation en sinus discrète, DST, sur la pluralité d'écarts de mouvement, et stocker un ou plusieurs coefficients, en particulier un ou plusieurs des coefficients les plus importants, de DST de la pluralité d'écarts de mouvement dans une information d'entrée coalescée.

11. Dispositif de transmission (100) selon une des revendications précédentes, comprenant en outre un capteur d'actif configuré pour acquérir une pluralité d'information d'entrée d'actif sur un ou plusieurs actifs et/ou un capteur environnemental configuré pour acquérir une pluralité d'informations environnementales sur un environnement du capteur environnemental.

12. Récipient de stockage (200), en particulier une corbeille à déchets, comprenant un dispositif de transmission (100) selon la revendication 11.

13. Procédé (300) de transmission d'une pluralité d'informations d'entrée, le procédé comprenant :
- l'attribution (310) d'une pluralité de pondérations de transmission à la pluralité d'informations d'entrée ;
- la coalescence (320) de la pluralité d'informations d'entrée sur la base de la pluralité de pondérations pour obtenir une ou plusieurs informations d'entrée coalescées, et l'attribution d'une ou plusieurs pondérations de transmission coalescées à l'une ou aux plusieurs informations d'entrée coalescées ; et
- la transmission (330) des une ou plusieurs informations d'entrée coalescées en fonction des pondérations de transmission attribuées, les informations d'entrée coalescées de pondération supérieure étant transmises avec une priorité plus élevée.

14. Support de stockage lisible par ordinateur stockant un code de programme, le code de programme comprenant des instructions pour l'exécution du procédé selon la revendication 13.
